Europäisches Patentamt

European Patent Office

Office européen des brevets

(11) Publication number: **0 087 014**
**B1**

(12) **EUROPEAN PATENT SPECIFICATION**

(45) Date of publication of patent specification: **10.09.86**

(51) Int. Cl.⁴: **B 29 B 9/06**

(21) Application number: **83100941.0**

(22) Date of filing: **01.02.83**

(54) Improvements in centrifugal pelletizers and methods of centrifugally pelletizing.

(30) Priority: **16.02.82 US 348734**
**16.02.82 US 348829**
**17.02.82 US 349575**

(43) Date of publication of application:
**31.08.83 Bulletin 83/35**

(45) Publication of the grant of the patent:
**10.09.86 Bulletin 86/37** .

(84) Designated Contracting States:
**AT CH DE FR GB IT LI**

(56) References cited:
**GB-A-1 143 627**
**US-A-3 266 085**
**US-A-3 358 323**
**US-A-3 424 832**
**US-A-3 483 281**
**US-A-3 950 120**

(73) Proprietor: **Baker Perkins Inc.**
**1000 Hess Street**
**Saginaw Michigan 48601 (US)**

(72) Inventor: **Todd, David B.**
**51 E. Hannum Blvd.**
**Saginaw Michigan (US)**
Inventor: **Layfield, James D.**
**5807 Two Mile Road Bay City**
**Michigan 48706 (US)**
Inventor: **Karian, Harutun G.**
**3595 Kettering Road**
**Saginaw Michigan (US)**

(74) Representative: **Tetzner, Volkmar, Dr.-Ing. Dr. Jur.**
**Van-Gogh-Strasse 3**
**D-8000 München 71 (DE)**

Courier Press, Leamington Spa, England.

## Description

The present invention relates to a pelletizer and to a method of forming pellets.

A centrifugal plastics pelletizer of this kind is used for forming pellets of thermoplastic materials such as polystyrene, polyethylene, polyvinylchloride, and polypropylene, among others. The pelletizing of such materials with incorporated additives is common because the pellets may be conveniently measured, packed, shipped, stored and used by the end user.

While many pelletizing systems find the thermoplastic material, in a flowable state, being expressed under pressure through orifices in a stationary die, as by a screw extruder, the useful efficiency (hydraulic power/total power supplied) of such systems is quite low.

To overcome the foregoing, and other problems associated with the stationary die type extrusion, centrifugal extruders have been developed in which thermoplastic material in a flowable state is fed into the interior of a hollow rotor to be centrifugally expressed through orifices in the rim of the rotor (see, for example, US—A— 3 358 323, 3 424 832 and 3 483 281).

A centrifugal plastics pelletizer of the kind referred to in the preamble of claim 1 is known by US—A—3 266 085. The particles which exit through the orifices in the periphery of the rotor impinge upon the wall of the housing, then fall through a space where some cooling takes place and finally are drawn out from the housing into a pump. This pelletizer using extremely high speeds of rotation results in very fine granules which are subjected to a heat treatment to cause contraction of the particles to a generally spherical form.

US—A—3 950 120 discloses a pelletizer in which material to be pelletized is fed into the interior of a die and is forced through the radial bores as the die is rotated by the action of the pelletizing rollers. Material forced out by the rollers is cut by a knife.

It is the object of the invention to provide a centrifugal plastics pelletizer of the kind referred to in the preamble of claim 1 in which there is a control of air flow, coolant flow, and pellet trajectory to minimize heat losses and which operates with minimum operating energy consumption.

The invention consists in the characterising features of claim 1.

A novel method of forming pellets from molten synthetic plastic material is subject matter of claim 20.

Useful modifications of the pelletizer according claim 1 and of the method according claim 20 are subject matter of claims 2 to 19 and 21, 22.

The features of the invention will become apparent by reference to the following specification and to the drawings.

Figure 1 is an end elevational view, with certain parts broken away, omitted, or shown in section, of a centrifugal pelletizer embodying the present invention;

Figure 2 is a side elevational view with certain parts broken away, omitted, or shown in section, of the pelletizer of Figure 1;

Figure 3 is an enlarged detail end view, with certain parts shown in broken lines, more particularly illustrating the severing knife assembly,

Figure 4 is a detail side elevational view of the severing means illustrated in Figure 3;

Figure 5 is an enlarged detail perspective view showing blade support mechanism;

Figures 6a and 6b are schematic diagrams disclosing two types of severing operations; and

Figure 7 is a graphic representation of pellet size distribution under certain operating conditions.

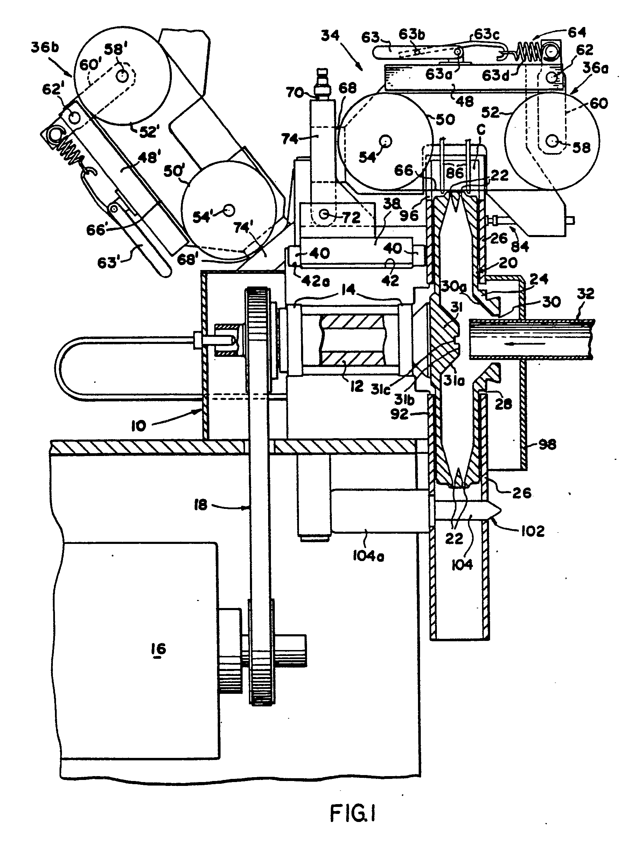

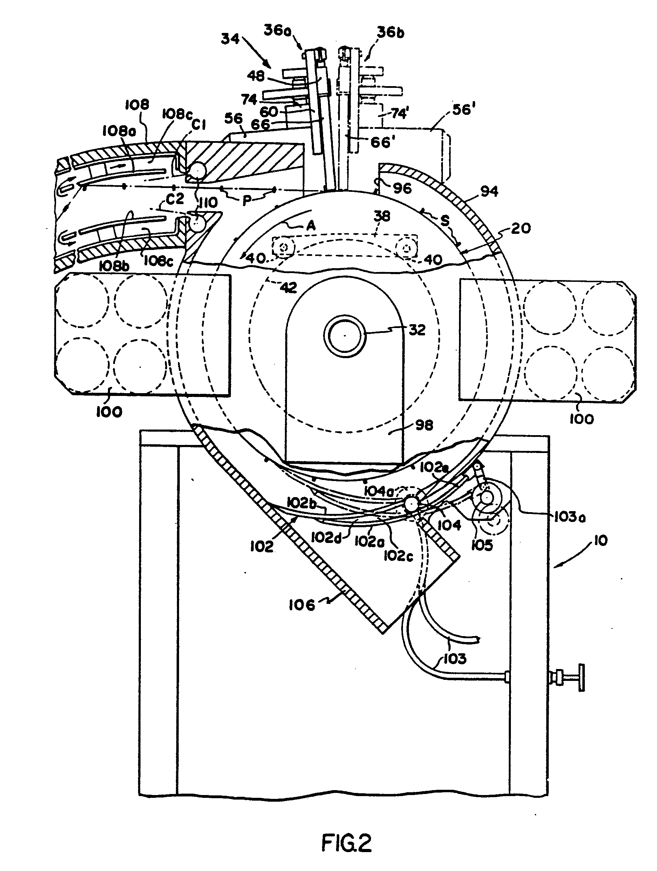

Referring first particularly to Figures 1 and 2, a centrifugal pelletizer embodying the present invention includes a housing designated generally 10, within which a cooled rotor shaft 12 is rotatably supported, as by bearings 14. A drive motor 16 is mounted within the housing and is drivably coupled to drive rotor 12, as with a belt and pulley coupling designated generally 18.

A hollow rotor 20 is fixedly mounted upon one end of shaft 12 to rotate with the shaft and a plurality of radially directed strand expressing orifices 22 open from the interior of the rotor through the rotor rim. In the embodiment shown in Figure 1, two rows of orifices 22 are shown.

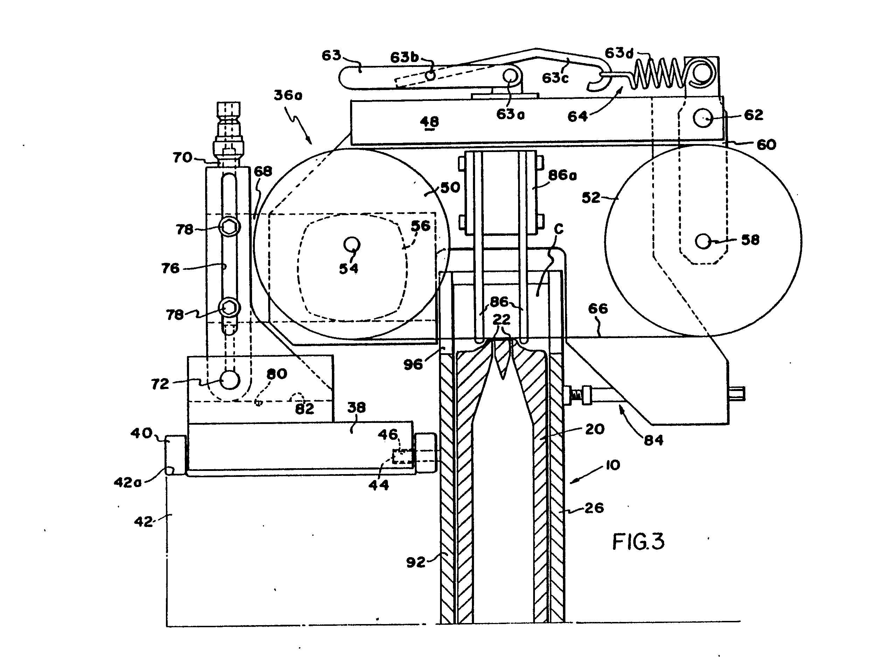

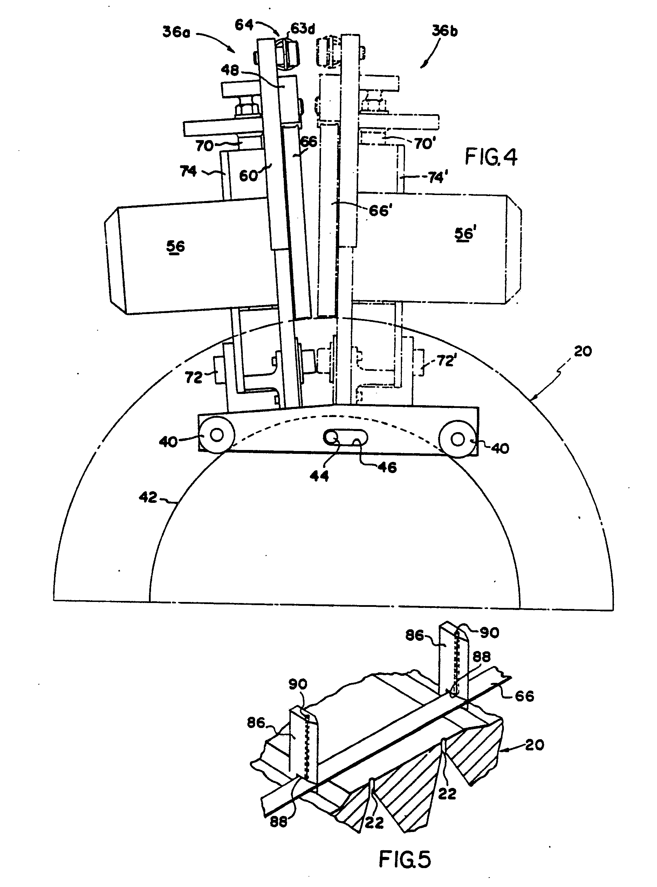

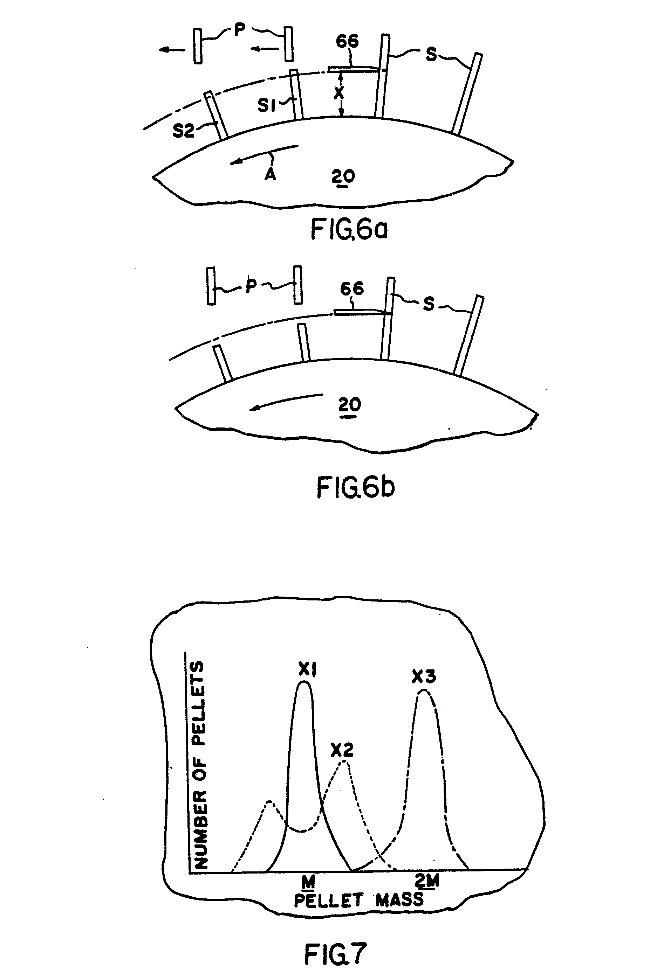

At the side of the rotor opposite its coupling to shaft 12, a hollow sleeve 24 extends axially outwardly from the rotor beyond the adjacent side wall 26 of housing 10, sleeve 24 passing freely through an opening 28 in side wall 26. Rotor sleeve 24 is formed with a central opening 30 through which a stationary feed tube 32 may be inserted with clearance to feed thermoplastic material at a predetermined velocity (feed rate) into the hollow interior of rotor 20 opposite a pin-like diverter and impeller 31 having a flared annular surface 31a and a front face 31b broken by communicating slots 31c extending radially at 90° intervals to form impellers which help to accelerate the flow from the 0 r.p.m. at which is received from tube 32 to the speed of rotation of rotor 20. It is believed apparent that, upon rotation of rotor 20, thermoplastic material, heated to a flowable state and fed from feed tube 32 into the interior of rotor 20, will be directed and impelled radially and then centrifugally expressed from the interior of rotor 20 through orifices 22 so that strands S (Figures 6a and 6b) of thermoplastic material will be expressed radially outwardly from the rotor periphery. The strands are converted into pellets by a severing device, designated generally 34 and most clearly shown in Figures 3 and 4. A like annularly flared surface 30a on the rotor front wall leads to the space 30 which, by permitting overflow to exit from the housing wall 26, avoids a polymer overflow buildup between the rotor and housing which would both increase power consumption and tend to cause a jam-up to occur.

As best seen in Figure 4, severing device 34 preferably includes two severing mechanisms designated generally 36a and 36b, which are identical except for being mirror image arrangements. The two mechanisms 36a and 36b are mounted upon a common carriage 38. Carriage 38 carries four support rollers 40 which support the carriage upon confined tracks 42a provided upon an axially extending annular shoulder 42 on housing 10 whose surface is coaxial with the rotor axis. A pin 44 fixedly mounted on housing 10 projects through a slot 46 in carriage 38 to define the end limits of circumferential movement of carriage 38 relative to the housing 10 which permit selective location of either severing device 36a, or severing device 36b, at a selected circumferential position relative to the rotor. Suitable set screw locking means 84, or the like, may be employed to releasably affix carriage 38 at the selected circumferential position.

As previously stated, severing devices 36a and 36b are of similar construction, thus only severing device 36a will be described in detail, it being understood the description is equally applicable to severing device 36b (primed numerals being used to designate like parts). Severing device 36a includes a main frame or bracket 48 upon which a pair of pulleys 50 and 52 are mounted. Pulley 50 is a driven pulley and is mounted upon the shaft 54 of a drive motor 56 whose housing is fixedly mounted upon bracket 48.

Pulley 52 is mounted for free rotation about a pin 58 carried on the lower end of an arm 60 pivotally mounted upon bracket 48 as at 62. A spring tension device, designated generally 64, biases arm 60 in a counterclockwise direction about pivot 62 as viewed in Figure 3 to apply tension to an endless severing band 66 (which may be constructed of thin spring steel in the range 0.1 and 0.5 mm in thickness), trained about pulleys 50 and 52. The device 64 includes a handle 63 pivoted at 63a and connected at 63b to an arm 63c which attaches to spring 63d, spring 63d securing at an opposite end to arm 60. As best seen in Figure 3, the lower run of endless band 66 extends parallel to the axis of rotor 20 and is located to extend transversely across the path of movement of strand S expressed from the rotor orifices.

Bracket 48 may be bodily adjusted radially of the rotor axis to vary the spacing between the rotor rim and the lower or severing run of severing band 66. The adjustment is accomplished by structure which includes a mounting lug 68 at the left-hand end of bracket 48 as viewed in Figure 3, which is threaded to receive an adjustment screw 70 whose lower end bears upon a pivot pin 72 mounted upon carriage 38. At either side of mounting lug 68, a pair of side plates 74 are pivotally mounted upon pin 72. Elongate slot 76 in each side plate 74 slidably receives a pair of locking screws 78 likewise threadably received in lug 68. With screws 78 loosened, rotation of screw 70 thus raises or lowers lug 68 relative to pivot 72, and the lug 68, and hence bracket 48 can be locked in a selected position of vertical adjustment by then tightening down the lock screws 78.

The pivot 72 serves as a pivotal mounting for the entire bracket 48 so that the bracket may be pivoted in a counterclockwise direction from the position shown in Figure 3 to move severing band 66 of the severing device, clear of the path of movement of strands expressed by the rotor. By employing two severing devices 36a and 36b as shown in Figure 4, one of the two devices 36a or 36b may be pivoted to an inoperative position so that its blade may be replaced, for example, while the other of the two severing devices is in its operative position. This arrangement enables blades to be replaced without requiring shutdown of the operation. Either cutter can be swung into position while the other is in operation, thereby permitting an interchange without interrupting polymer flow. The bracket 48 may be maintained in the operative position shown in Figure 3 by the engagement between the lower surface 80 of side plates 74 with a flat surface 82 on carriage 38. However, it may be preferable to provide further support for the cantilevered end of the bracket 48 which is swung to the operative position by means of a spring biased snap clamp device designated generally 84 (Figure 3).

To assist in maintaining the operating portion of severing blade 66 in accurate alignment and to guard against twisting of the blade, blade guides 86 (Figure 3) are fixedly mounted on bracket 48. The guides 86 are formed with blade-receiving slots 88 (best seen in Figure 5) which slidably receive the blade to brace the blade against the impact it receives when it is contacted by the rapidly rotating strands and to maintain the blade against twisting. The guides 86 are located on opposite sides of the paths of movement of the set or sets of strands expressed from the embodiment of the rotor disclosed. In the case where rotors of greater axial thickness and greater numbers of sets of orifices are employed, additional blade guides are employed so that the unbraced portion of the blade would span no more than two sets of orifices.

While movement of the blade 66, by operation of motor 56, will normally provide for adequate cooling of the renewable flexible blade with many polymer melts by continuously changing the point of engagement between the blade and strands so that the blade is kept cool and sharp, additional blade cooling can be economically and efficiently provided by means of passages 90 in blade guides 86 (on blade guide holder 86a), which may be employed to supply coolant continuously to the top of the blade (remote from the die orifices 22 so as not to chill them). The blade guides 86 not only commence the quenching operation with some more difficult to handle polymers (thus increasing the polymer range which can be handled), but also reduce the unsupported blade span to minimize vibration.

Referring now particularly to Figures 1 and 2, it is seen that housing 10 includes rotor housing side plates 26 and 92, which are spaced from rotor 20 with but a slight axial clearance. As best seen in Figure 2, however, the circumferential portion 94 of housing 10 is spaced a substantial distance from the periphery of rotor 20 to allow for a substantial radial growth and projection of strands from the rotor orifices and provide a chamber C between wall 94 and the rotor. The rotor housing is formed with an opening at 96 to permit movement of the bands 66 into and out of operative relationship with the rotor. Mounted on the outer side of rotor housing side wall 26 to receive and confine thermoplastic material which may flow through the clearance between rotor sleeve 24 and feed tube 32 upon over-filling of the rotor, is a spillover housing 98. The sleeve 24 thus prevents any over-flow from getting into the relatively confined space between the rotor and the adjacent side wall 26 of the housing. The lower end of spillover housing 98 is shown as open, but could be connected to a collection duct.

In order to make up heat loss which the closed construction keeps to a minimum and maintain the temperature of material within rotor 20, magnetic heaters such as 100 may be mounted upon the rotor housing to function in a manner similar to that described in patent US—A—3,483,281.

On initial start-up of the device, some time is required to achieve steady state temperature and other operating conditions, and, during this period of time, material extruded from rotor 20 is diverted by means of a knife-gate 102, pivotally mounted upon the housing as at 104, see Figure 2, adjacent a housing outlet in the form of a scrap chute 106. At this time, the band blade mechanisms 36a and 36b are both pivoted to up position, and it is knife-gate 102 which performs the strand severing function and diverts the material cut off to chute 106. During start-up, and shut down too, (the rotor is self-emptying of material at the end of a run), the material extruded from the rotor orifices is shaved off by pivoting diverter knife 102 into contact with the rotor periphery, so that the shaved-off strands are discharged through tube 106. The knife 102 is in the form of a hollow housing and includes walls 102a and 102b with closed ends 102c providing a chamber 102d to which a temperature controlling liquid (normally a coolant) medium may be circulated via inlet and outlet hoses 103. Plate 102a has a trailing rear end 102e carried by an actuating handle device 103a which is manipulated to move the knife 102 to selected positions and releasably maintain them there. During normal operation, the gate 102 is pivoted to a position where it closes the entry to diverter chute 106 so no air (and therefore heat) is lost out this opening. In some instances, during operation, gate 102 may be pivoted to an intermediate position to divert very fine hair-like plastic material (known in the trade as "angel hair") which is in extruding operations formed and carried by the air current generated around to this point, to thus permit its removal out duct 106. The pin 104 which is fixed to gate 102 is journaled in a bearing 104a supported on the housing 10 and a readily releasable set or lock screw, or handle operated cam lock device, 105 can be used to secure the gate- knife 102 in selected position at or between the extreme positions illustrated in Figure 2.

As described above, during operation, only one of the two severing devices 36a, 36b will be located in an operative position, with the severing run of its associated severing band 66 located at a selected radial distance from the rotor periphery to sever pellets from the radially projecting strands carried past the band by the rotating rotor 20. Pellets severed by the severing device continue in straight line motion in a path that is generally tangential to rotor 20 and pass into the entrance of a collecting duct 108 of rectangular cross section affixed to housing 10. Coolant spray manifolds 110, have ports directing spray curtains $C_1$ and $C_2$ of water or another suitable medium into tube 108 (and away from rotor 20), along the false top 108a and false bottom 108b provided therein. These sprays and the resultant coolant which fills duct 108 a short distance downstream from the entrance of tube 108 quench the pellets to prevent or minimize agglomeration of the pellets. The air passages 108c formed between the false top 108a and the duct 108 and the false bottom 108b and the duct provide chambers for air induced into the duct by and with the coolant to disengage and flow in a reverse direction back to the mouth of duct 108. In this way additional air is prevented from being induced into the system by the air current inducing flow of the sprays $C_1$ and $C_2$ acting to pull other air into the duct 108.

In Figures 6a and 6b two types of cutting action of the apparatus are schematically illustrated. The different cutting actions depend primarily upon the physical properties and characteristics of the material being handled.

In Figure 6a, there is shown a schematic representation of what might be termed the generalized theory of operation of the device. Rotor 20 is rotating in the direction indicated by arrow A, and cutter band 66 is positioned at a radial distance X from the rotor periphery. Cylindrical strands of thermoplastic material S expressed from the rotor orifices are carried by the rotation of rotor 20 successively into engagement with the severing blade 66 which severs a length of the material at the distal end of the strand S to form cylindrical pellets P, the severed pellets having sufficient momentum to continue to travel in straight line motion (tangentially) through the air currents in chamber C between rotor 20 and housing peripheral wall 94, on through the coolant curtain, and on into the pellet duct 108 (not shown in Figure 6a). The peripheral positioning of the blade severing via platform carrier 38 is also important since the exact angle of trajectory is influenced by the angle of the cutting edge. With the cooled moving blade the pellets moreover, will uniformly fly off in a straight line (do not stick), more suited to quenching in the water spray curtain and pellet/water slurry formed in duct 108. The severed strands S1 and S2 of Figure 6a immediately begin to grow or extend radially as the centrifugal force on the flowable thermoplastic material within rotor 20 continues to express material through the orifices so that, at the conclusion of one revolution, the strand S1 has radially grown to the length of the strand S as it again approaches severing blade 66. Where this generalized situation exists, pellet size may be maintained substantially uniform and controlled simply by appropriately selecting the blade spacing X with respect to steady state operation of the device.

However, experimental work has indicated that, in the case of highly visco-elastic polymers, such as low density polyethylene, pellet uniformity is not so simply achieved. Upon severing of the pellet, the removal of the mass of the pellet from the outer end of the strand causes the uncut portion of the strand to snap back, as indicated in Figure 6b. The amount by which the visco-elastic material snaps back or foreshortens, upon the severing of a length from its distal end, is generally proportional to the mass of the material severed. Thus, a greater snapback or retraction of the unsevered length of the strand will occur when a relatively long portion is severed from its distal end. The magnitude of the "snap-back" may be such that the strand does not grow back to its former length, during the next revolution to the severing blade. In this case, when the foreshortened strand arrives at the blade, a smaller length of material will be cut from its distal end by the blade and the "snap-back" will not be as great as in the previous case. Thus, during the next revolution, the strand will grow to a length greater than in the first case and again a longer length of strand will be severed. Thus, pellets of short and long lengths will alternately be severed on alternate successive revolutions of the rotor.

This phenomenon is illustrated graphically in Figure 7 in which the size or mass distribution of pellets for three different knife spacings are plotted. The curve X1 represents a first knife spacing and shows a relatively narrow distribution of pellets which represents only a slight non-uniformity of pellet mass from a desired mass M.

Curve X2 shows the mass distribution which occurs at a slightly greater knife spacing X2 in which the phenomenon described above is evident. It will be noted that the mass distribution is much wider than in the case of knife spacing X1, and that the distribution curve has two separate peaks indicative of the severing of alternate short and long lengths from a given strand on successive revolutions because of the "snap-back" characteristic described above.

Curve X3 represents a situation in which the length of the strand which is severed causes a "snap-back" of the unsevered portion of the strand of a magnitude such that during the completed revolution after the severing, the strand does not grow to a length sufficient to engage the severing blade at the conclusion of that revolution. At this point, the distribution becomes narrow again, but the distribution curve peaks at a pellet mass which is twice that attained for a knife spacing represented by the curve X1. In this instance, a given strand is being cut only once for each two complete revolutions of the rotor.

Depending upon the visco-elastic properties of the material, it thus becomes possible to provide uniform small pellets, or uniform twice as large pellets, at the same feed rate, rotor speed and other operating conditions, merely by changing the knife position from a spacing X (which creates pellets X1), to a greater spacing which cuts the strand uniformly once each two revolutions (and creates pellets X3 of twice the mass). Selected bimodal distributions are also possible.

## Claims

1. A centrifugal plastics pelletizer for forming pellets from molten plastic material; with a housing (10); a hollow disc-like rotor (20) comprising side walls and a rim wall journaled on said frame and having an opening (30) in one of its side walls for admitting plastics material thereto; there being a series of circumferentially spaced orifices (22) in the rotor (20) at the periphery thereof; said housing (10) including side walls (26, 92) connected by an outer wall (94); said housing (10) being open to said rotor to receive strands of material extruded through said orifices; characterized in that a knife (66) is mounted at a predetermined fixed location within said housing (10) and extends transversely to said orifices (22) at a spaced distance from them for severing the strands (S) of material into pellets (P), as the rotor (20) rotates; a cooling and collecting duct (108) extends generally tangentially from said housing (10) generally in the plane of said knife (66); and means (16, 12) is provided for driving said rotor (20) at a selected rate of rotation to move said strands against said knife (66) with sufficient velocity to provide the momentum to move the severed pellets (P) through to said duct.

2. The apparatus of claim 1 characterized in this, that fluid spray means is located adjacent said entrance opening for establishing a fluid spray curtain through which said pellets pass to proceed through said duct means.

3. The apparatus of claim 2 characterized in this, that said spray means comprises a liquid coolant spray means having outlet nozzles opening to direct flows of spray in a direction away from said rotor.

4. The apparatus of claim 3 characterized in this, that a false wall spaced from the duct is provided therein adjacent the entrance of the duct to provide an air chamber for disengagement of air from the spray and recirculation thereof to the vicinity of the spray means.

5. The apparatus of claim 1 characterized in this, that said rotor is driven about an axis of rotation generally parallel to the plane of said knife and said knife is mounted on said frame for movement into and out of operative position, and said housing has a generally radially extending opening in its outer wall permitting said knife to be moved and out of operative position.

6. The apparatus of claim 5 characterized in this, that said rotor is mounted for rotation about a horizontal axis, and inlet means in said housing aligned with the opening in said rotor for feeding thermoplastic material coaxially into the interior of said rotor.

7. The apparatus of claim 5 characterized in this, that brackets mount a pair of knives closely adjacent each other, means mounting the bracket of each knife for movement between an idle position wherein the knife is clear of the path of movement of said strands and an operative position in which said knife extends across the path of movement of said strands.

8. The apparatus of claim 7 characterized in this, that an axially extending shoulder is on said housing coaxial with said rotor, and wherein a carriage pivotally mounts said brackets and has roller means rollingly engaged with said shoulder for adjustably positioning said carriage and brackets circumferentially of said housing.

9. The apparatus of claim 1 characterized in this, that said knife comprises an endless blade; and means supporting the blade for endless travel with one of its runs extending parallel to said rim and outer wall of the housing, and having its edge facing said duct sharpened to form a cutting edge.

10. The apparatus of claim 9 characterized in this, that blade guide bars are on said means supporting the blade for travel, with slots slidably engaging and supporting said blade at spaced locations on said severing run at opposite sides of that section of said blade aligned with the path of movement of said strands.

11. The apparatus of claim 10 characterized in this, that means are provided for removing heat from said blade guide bars, and thereby said blade, comprising passages in said bars extending therein to the vicinity of said slots and blade member from the side remote from the rotor.

12. The apparatus of claim 1 characterized in this, that said housing side walls closely parallel said rotor side walls to leave only running clearance between them; and said rotor orifices in the rim wall communicate with a chamber, between the rotor rim wall and housing peripheral wall, from which said duct leads.

13. The apparatus of claim 12 in which a bracket is mounted on said frame for back and forth movement and carires said blade member and the means for driving it; said housing chamber has an opening in its peripheral wall; and said bracket is moveable to move the blade out of the housing chamber through the opening in the peripheral wall thereof.

14. The apparatus of claim 13 in which said bracket is mounted on a carrier supported for travel on a curvilinear surface coaxial with the rotor axis.

15. The apparatus of claim 1 characterized in this, that a scrap collecting duct extends generally tangentially relative to said rotor from said housing downstream from said cooling and collecting duct considering the direction of rotation of said rotor; and an auxiliary knife means downstream from said knife and cooling and collecting duct is movable in said housing chamber adjacent said scrap collecting duct from a non-severing position to a severing position adjacent said rotor to sever strands during start-up and close-down operation of the pelletizer.

16. The apparatus of claim 15 characterized in this, that said auxiliary knife in non-severing position spans said chamber to block said scrap collecting duct and is pivotally mounted to swing in to a severing position in which it unblocks the scrap collecting duct.

17. The apparatus of claim 1 characterized in this, that the one side wall of the rotor has an opening to receive an axially extending molten material feed tube smaller in diameter than said opening to provide a space around the feed tube permitting limited outflow, and the housing has an axially projecting spill-over duct portion on its corresponding side wall enclosing said outflow space and leading away therefrom, provided with an opening to pass the feed tube.

18. The apparatus of claim 17, characterized in this, that the opposite wall of the rotor adjacent said space has an annularly flared diverging portion leading to said space.

19. The apparatus of claim 1, characterized in this, that a member of frustoconical shape is provided on the rotor side wall axially opposite the opening therein; and has a radially outwardly flared annular wall directing material supplied through the feed tube toward the orifices, the diverter member being divided into segments which create an impeller system.

20. A method of forming pellets from molten synthetic plastic material comprising the steps of: supplying said material to a hollow disc-like rotor comprising side walls and a rim wall, through an opening in one of its side walls; moving said material by centrifugal force through a series of circumferentially spaced orifices in the rotor rim wall to a peripheral chamber formed between the rim wall and the perimetral wall of a surrounding housing for said rotor having side walls connected by said perimetral wall; severing the strands egressing from said orifices with a knife (66) mounted at a predetermined fixed location within said housing (10) which extends transversely to said orifices (22) at a spaced distance from them for severing the strands (S) if material into pellets (P), as the rotor (20) rotates; and moving the severed pellets generally tangentially to a cooling and collecting duct (108) which extends generally tangentially from said housing (10) generally in the plane of said knife (66), by driving said rotor (20) at a selected rate of rotation to move said strands against said knife (66) with sufficient velocity to provide the momentum to move the severed pellets (P) through said chamber to said duct.

21. The method of claim 20 characterized in this, that said pellets are moved through a coolant spray curtain at the entrance of said duct.

22. The method of claim 20 including the step of controlling the size of the pellets by locating a single strand severing member to extend across the general plane of movement of the expressed strands at a radial distance from said rim such that the visco-elastic retraction of a given strand upon the severing of a pellet therefrom is such that said given strand is engaged by said severing member only on alternate revolutions of said rotor.

**Revendications**

1. Un appareil de granulation centrifuge de matières plastiques pour former des granules à partir de matière thermoplastique, comportant un carter (10), un rotor creux en forme de disque (20) muni de parois latérales et d'une couronne en appui sur ledit carter et comportant une ouverture (30) ménagée dans l'une de ses parois latérales pour l'alimentation de la matière plastique, une série d'orifices périphériques espacés (22) étant ménagés sur la périphérie du rotor (20), ledit carter (10) comportant des parois latérales (26, 92) reliées ensemble par une couronne externe (94), ledit carter (10) étant ouvert du côté dudit rotor pour recevoir des cordons de matière extrudés à travers lesdits orifices, caractérisé en ce qu'un couteau (66) est monté à un endroit fixe prédéterminé dans ledit carter (10) et s'étend transversalement auxdits orifices (22) à distance de ceux-ci pour sectionner les cordons (S) de matière en granules (P) pendant la rotation du rotor (20), un conduit collecteur de refroidissement (108) s'étendant de manière généralement tangentielle à partir dudit carter (10) généralement dans le plan dudit couteau (66), et que des moyens (16, 12) sont prévus pour entraîner ledit rotor (20) à une vitesse de rotation choisie pour amener lesdits cordons sous ledit couteau (66) à une vitesse suffisante pour produire l'énergie au déplacement des granules (P) sectionnés à travers ledit conduit.

2. Appareil selon la revendication 1, caractérisé en ce que des moyens de pulvérisation de fluide sont montés adjacents à ladite ouverture d'entrée en vue de produire un rideau de pulvérisation de liquide, lesdits granules passant à travers ce dernier pour être évacués par ledit conduit.

3. Appareil selon la revendication 2, caractérisé en ce que lesdits moyens de pulvérisation comprennent un système de pulvérisation d'un liquide de refroidissement ayant des buses de sortie avec des ouvertures dirigeant les flux de pulvérisation dans la direction opposée audit rotor.

4. Appareil selon la revendication 3, caractérisé en ce qu'une fausse cloison espacée du conduit est adjacente à l'entrée du conduit pour former un compartiment à air destiné à séparer l'air de pulvérisation et de recirculation au voisinage des moyens de pulvérisation.

5. Appareil selon la revendication 1, caractérisé en ce que ledit rotor est entraîné autour d'un axe de rotation généralement parallèle au plan dudit couteau et que ledit couteau est monté sur ledit cadre pour être amené en position active et hors de cette position, et que ledit carter a généralement une ouverture s'étendant radialement dans sa paroi extérieure afin d'amener ledit couteau en position active et l'en écarter.

6. Appareil selon la revendication 5, caractérisé en ce que ledit rotor est monté en rotation sur un axe horizontal et que des moyens d'entrée dans ledit carter sont alignée avec l'ouverture ménagée dans ledit rotor pour amener coaxialement la matière thermoplastique à l'intérieur dudit rotor.

7. Appareil selon la revendication 5, caractérisé en ce que des supports portent une paire de couteaux disposés tout près l'un à côté de l'autre, que des moyens supportant chaque porte couteau sont prévus pour se déplacer entre une position de repos, dans laquelle le couteau se trouve en dehors de la trajectoire desdits cordons, et une position active dans laquelle ledit couteau s'étend transversalement à la trajectoire desdits cordons.

8. Appareil selon la revendication 7, caractérisé en ce qu'un épaulement s'étendant dans le sens axial se trouve sur ledit carter coaxialement audit rotor et que lesdits supports sont montés pivotants sur un chariot muni de galets en prise mobile avec ledit épaulement pour positionner de manière réglable ledit chariot et lesdits supports à la périphérie dudit carter.

9. Appareil selon la revendication 1, caractérisé en ce que ledit couteau comprend une lame sans fin et des moyens supportant la lame pour le déplacement sans fin sur l'un des chemins s'étendant parallèlement à l'axe du rotor à travers ledit carter, ladite lame étant plate et s'étendant parallèlement à ladite couronne extérieure du carter, et dont le bord situé en face du conduit est affûté de manière à former une arête de coupe.

10. Appareil selon la revendication 9, caractérisé en ce que des barres guides-lame sont montées sur lesdits moyens pour supporter la lame pendant le déplacement, des fentes étant engagées de manière coulissante et supportant ladite lame en des endroits espacés situés sur le chemin de coupe des côtés opposés à cette partie de la lame se trouvant dans l'alignement avec la trajectoire desdits cordons.

11. Appareil selon la revendication 10, caractérisé en ce que des moyens sont prévus pour évacuer la chaleur desdites barres guide-lames et par conséquent de ladite lame, comportant des passages ménagés dans lesdites barres s'étendant jusqu'au voisinage desdites fentes et de la lame à partir du côté éloigné du rotor.

12. Appareil selon la revendication 1, caractérisé en ce que lesdites parois latérales du carter sont étroitement parallèles aux parois latérales du rotor pour ne laisser qu'un jeu fonctionnel entre elles, et que lesdits orifices ménagés dans la couronne du rotor sont en communication avec un compartiment se trouvant entre la couronne du rotor et la paroi périphérique du carter, d'où part ledit conduit.

13. Appareil selon la revendication 12 du type sur lequel un support est monté sur ledit cadre pour effectuer un mouvement de va-et-vient et porte ladite lame ainsi que les moyens assurant son entraînement, ledit compartiment du carter ayant une ouverture ménagée dans sa paroi périphérique, et ledit support est monté mobile pour déplacer la lame hors du compartiment à travers l'ouverture ménagée dans la paroi périphérique.

14. Appareil selon la revendication 13 du type sur lequel ledit support est monté sur un chariot supporté pour déplacer sur une surface incurvée coaxiale à l'axe du rotor.

15. Appareil selon la revendication 1, caractérisé en ce qu'un conduit collecteur de déchets s'étend de manière généralement tangentielle audit rotor à partir dudit carter en aval du conduit collecteur de refroidissement, vu dans le sens de rotation dudit rotor, et que des moyens de coupe auxiliaire en aval dudit couteau et du conduit collecteur de refroidissement sont mobiles dans ledit compartiment du carter au voisinage du conduit collecteur de déchets à partir d'une position inactive dans une position de coupe adjacente audit rotor pour sectionner des cordons pendant la phase de démarrage et d'arrêt de l'appareil de granulation.

16. Appareil selon la revendication 15, caractérisé en ce que ledit couteau auxiliaire enjambe dans la position inactive ledit compartiment pour bloquer ledit conduit collecteur de déchets et il est monté pivotant pour être basculé dans la position de coupe dans laquelle il débloque le conduit collecteur de déchets.

17. Appareil selon la revendication 1, caractérisé en ce qu'une paroi latérale du rotor comporte une ouverture destinée à recevoir un tube d'alimentation de matière thermoplastique s'étendant axialement, dont le diamètre est inférieur à ladite ouverture, en vue de ménager un espace autour du tube d'alimentation pour permettre un écoulement limité, et que le carter comporte une partie tubulaire de débordement en saillie axiale sur sa paroi latérale correspondante renfermant ledit espace d'écoulement et partant de ce dernier, qui est munie d'une ouverture débouchant dans le tube d'alimentation.

18. Appareil selon la revendication 17, caractérisé en ce que la paroi opposée du rotor adjacente audit espace comporte une partie annulaire évasée de déviation menant audit espace.

19. Appareil selon la revendication 1, caractérisé en ce qu'un élément en forme tronc de cône est prévu sur la paroi latérale du rotor axialement opposée à l'ouverture et comporte une paroi annulaire radialement évasée vers l'extérieur pour diriger la matière fournie par le tube d'alimentation vers les orifices, l'élément de dérivation étant divisé en segments formant un système à palettes.

20. Procédé de granulation à partir de matière thermoplastiques synthétique comprenant les étapes suivantes: alimenter ladite matière dans un rotor creux en forme de disque comportant des parois latérales et une couronne; déplacer ladite matière par la force centrifuge à travers une série d'orifices espacés ménagés à la périphérie de la couronne du rotor dans un compartiment périphérique ménagé entre la couronne et la paroi périphérique d'un carter de confinement pour ledit rotor dont les parois latérales sont réunies par ladite paroi périphérique; sectionner les cordons sortant desdits orifices au moyen d'un couteau (66) monté à un endroit fixe prédéterminé dans ledit carter (10) s'étendant transversalement auxdits orifices (22) à distance de ces derniers pour sectionner les cordons de matière (S) en granules (P) pendant la rotation du rotor (20); et déplacer les granules sectionnés de manière généralement tangentielle à un conduit collecteur de refroidissement (108) s'étendant de manière généralement tangentielle à partir dudit carter (10) généralement dans le plan dudit couteau (66), par entraînement dudit rotor (20) à une vitesse de rotation choisie pour amener lesdits cordons contre ledit couteau (66) à une vitesse suffisante en vue de produire l'énergie nécessaire au déplacement des granules sectionnés (P) à travers ledit compartiment vers ledit compartiment vers ledit conduit.

21. Procédé selon la revendication 20, caractérisé en ce que lesdits passent à travers un rideau de pulvérisation d'un liquide de refroidissement avant de pénétrer dans ledit conduit.

22. Procédé selon la revendication 20 comprenant l'étape de commande de la dimension des granules qui consiste à positionner à une distance radiale de ladite couronne un seul élément de coupe du cordon s'étendant transversalement au plan général de déplacement des cordons extraits de manière que le retrait viscoélastique d'un cordon donné à la suite du sectionnement du granule à partir de ce dernier est tel que ledit élément de coupe entre en contact avec ledit cordon spécifique seulement après un tour sur deux dudit rotor.

**Patentansprüche**

1. Vorrichtung zum Schleudergranulieren zum Bilden von Granalien aus geschmolzenem Kunststoffmaterial, enthaltend ein Gehäuse (10); einen hohlen, scheibenähnlichen Rotor (20) mit Seitenwänden und einem Rand, der auf einem Träger gelagert ist und eine Öffnung (30) in einer seiner Seitenwände aufweist, wodurch Kunststoffmaterial eingelassen wird; eine Reihe von in Umfangsrichtung verteilt angeordneten Öffnungen (22) am Umfang des Rotors (20), wobei das Gehäuse (10) durch eine äußere Wand (94) verbundene Seitenwände (26, 92) aufweist und das Gehäuse (10) zum Rotor offen ist, um aus den Öffnungen herausgepresste Materialstränge aufzunehmen, dadurch gekennzeichnet, daß ein Messer (66) an einer festen, vorgegebenen Stelle innerhalb des Gehäuses (10) angeordnet ist und sich quer zu den Öffnungen (22) mit einem Abstand von ihnen erstreckt, um die Materialstränge bei Drehung des Rotors in Granalien zu schneiden, daß ein Kühl- und Sammelkanal vorgesehen ist, der sich im wesentlichen tangential von dem Gehäuse (10) und im wesentlichen in der Ebene des Messers (66) erstreckt und daß Vorrichtungen (16, 12) vorgesehen sind, die den Rotor (20) auf eine ausgewählte Drehgeschwindigkeit antreiben, wodurch Stränge mit solcher Geschwindigkeit gegen das Messer (66) bewegt werden, daß ein ausreichendes Moment für die Bewegung der abgeschnittenen Granalien (P) durch den Sammelkanal zur Verfügung steht.

2. Vorrichtung nach Anspruch 1, dadurch gekennzeichnet, daß benachbart zu einer Eingangsöffnung eine Sprühvorrichtung vorgesehen ist, die einen Flüssigkeitssprühvorgang erzeugt, durch den die Granalien passieren, um durch den Kanal hindurchzutreten.

3. Vorrichtung nach Anspruch 2, dadurch gekennzeichnet, daß die Sprühvorrichtung eine Kühlflüssigkeitseinrichtung enthält, die Öffnungen der Austrittsdüsen aufweist, die den Sprühfluß in eine entgegengesetzte Richtung vom Rotor wegleiten.

4. Vorrichtung nach Anspruch 3, dadurch gekennzeichnet, daß eine doppelte Wand mit Abstand vom Kanal in diesen, benachbart zum Eingang des Kanals vorgesehen ist, wodurch eine Luftkammer vorgesehen ist, die Luft von versprühten Medium trennt und dadurch in die Nähe der Sprühvorrichtung zurückleitet.

5. Vorrichtung nach Anspruch 1, dadurch gekennzeichnet, daß der Rotor um eine Rotationsachse angetrieben wird, die im wesentlichen parallel zu der Messerebene verläuft und daß das Messer zur Bewegung in die und aus der Arbeitsstellung auf dem Träger angebracht ist und daß in der Außenwand des Gehäuses eine im wesentlichen radial ausgerichtete Öffnung vorgesehen ist, wodurch eine Bewegung in die und aus der Arbeitsstellung ermöglicht wird.

6. Vorrichtung nach Anspruch 5, dadurch gekennzeichnet, daß der Rotor um eine horizontale Achse drehbar angeordnet ist und daß Einführeinrichtungen im Gehäuse vorgesehen sind, die auf die Öffnung des Rotors ausgerichtet sind, wodurch thermoplastisches Material koaxial in das Innere des Rotors eingeführt wird.

7. Vorrichtung nach Anspruch 5, dadurch gekennzeichnet, daß Halterungen zwei dicht nebeneinanderliegende Messer tragen, daß Einrichtungen vorgesehen sind, die die Halterungen jedes Messers tragen und beweglich sind zwischen einer Ruheposition, in der sich das Messer außer Kontakt mit der Bewegungsbahn der Materialstränge befindet und einer Arbeitsstellung, in der das Messer quer zur Bewegungsbahn der Materialstränge verläuft.

8. Vorrichtung nach Anspruch 7, dadurch gekennzeichnet, daß ein sich axial erstreckender Ansatz auf dem Gehäuse koaxial mit dem Rotor angeordnet ist und wobei ein Schlitten drehbar diese Halterungen trägt und Rollen aufweist, die zur einstellbaren Positionierung des Schlittens und des Trägers am Umfang des Gehäuses in rollendem Eingriff mit dem Ansatz stehen.

9. Vorrichtung nach Anspruch 1, dadurch gekennzeichnet, daß das Messer ein endloses Band enthält, daß Einrichtungen vorgesehen sind, die das Band für einen endlosen Umlauf tragen, wobei ein Trum des Bandes parallel zur Rotorachse durch das Gehäuse verläuft, und daß das Band flach ist und parallel zu dem Rand und der Außenwand des Gehäuses verläuft, wobei seine dem Kanal zugewandte Seite zur Bildung einer Trennkante geschärft ist.

10. Vorrichtung nach Anspruch 9, dadurch gekennzeichnet, daß Bandführungsstreben auf der Einrichtung angebracht sind, die die Bandbewegung unterstützen, wobei Schlitze in gleitbeweglichem Eingriff mit dem Band stehen und das Band an mit Abstand angeordneten Stellen des schneidenden Trums, auf entgegengesetzten Seiten des Bandabschnittes unterstützen, das auf die Bewegungsbahn der Materialstränge ausgerichtet ist.

11. Vorrichtung nach Anspruch 10, dadurch gekennzeichnet, daß Einrichtungen vorgesehen sind, die die Wärme von den Bandführungsstreben und dadurch vom Trennelement abführen, wobei Öffnungen in diesen Streben vorgesehen sind, die sich darin bis zur Nähe der Schlitze und des Bandes von der dem Rotor abgewandten Seite erstrecken.

12. Vorrichtung nach Anspruch 1, dadurch gekennzeichnet, daß die Gehäuseseitenwände dicht an den Rotorseitenwänden anliegen, wodurch lediglich ein Arbeitsspiel zwischen beiden vorhanden ist, und daß die Rotoröffnungen in dem Rand mit einer Kammer zwischen dem Rotorrand und der Gehäuseumfangswand in Verbindung stehen, von der der Kanal wegführt.

13. Vorrichtung nach Anspruch 12, dadurch gekennzeichnet, daß eine Halterung zur Hin- und Herbewegung auf dem Träger angebracht ist und die das Trennelement und die Vorrichtungen für seine Betätigung tragen, wobei die Gehäusekammer eine Öffnung in ihrer peripheren Wand aufweist und die Halterung so beweglich ist, daß das Band aus der Gehäusekammer durch die Öffnung in der peripheren Wand herausbewegt wird.

14. Vorrichtung nach Anspruch 13, dadurch gekennzeichnet, daß die Halterung auf einem Träger angebracht ist, der für eine Bewegung auf einer gekrümmten Fläche koaxial zur Rotorachse unterstützt ist.

15. Vorrrichtung nach Anspruch 1, dadurch gekennzeichnet, daß sich eine Abfallsammelschurre im wesentlichen tangential in Bezug auf den Rotor vom Gehäuse und unterhalb des Kühl- und Sammelkanals — bezogen auf die Drehrichtung des Rotors — erstreckt und daß eine Hilfsmesseranordnung unterhalb des Bandes und des Kühl- und Sammelkanals in einer, der Abfallsammelschurre naheliegenden Gehäusekammer von einer nicht schneidenden zu einer dem Rotor naheliegenden, schneidenden Stellung gedreht werden kann, wodurch Strange während des Anlaufens und Abschaltens der Vorrichtung zum Schleudergranulieren geschnitten werden.

16. Vorrichtung nach Anspruch 15, dadurch gekennzeichnet, daß die Hilfsmesseranordnung in einer nicht schneidenden Stellung die Kammer überspannt und dadurch die Abfallsammelschurre blockiert und die drehbar gelagert ist, um in eine Schneidstellung zu schwingen, in der sie die Abfallsammelschurre freigibt.

17. Vorrichtung nach Anspruch 1, dadurch gekennzeichnet, daß die eine Seitenwand des Rotors eine Öffnung aufweist, wodurch ein axiales Zuleitungsrohr für geschmolzenes Material aufgenommen wird, das im Durchmesser kleiner ist als die Öffnung, wodurch ein Zwischenraum um das Zuleitungsrohr gebildet ist, der einen begrenzten Ausfluß erlaubt, und daß das Gehäuse ein axial hinausragendes Überlaufgehäuse an seiner entsprechenden Seitenwand aufweist, wobei der Auslaufzwischenraum mit eingeschlossen ist und von ihm wegführt und mit einer Öffnung zum Durchführen des Zuleitungsrohres versehen ist.

18. Vorrichtung nach Anspruch 17, dadurch gekennzeichnet, daß die gegenüberliegende, dem Zwischenraum naheliegende Rotorwand ein ringförmiges, nach außen auseinanderlaufendes, zu dem Zwischenraum hinführendes Stück aufweist.

19. Vorrichtung nach Anspruch 1, dadurch gekennzeichnet, daß ein kegelstumpfförmiges Element auf der Rotorseitenwand, gegenüber der Öffnung in diesen vorgesehen ist und eine radial nach außen auseinanderlaufende, ringförmige Wand aufweist, die das durch das Zuleitungsrohr beschaffte Material gegen die Öffnungen leitet, und daß das Ableiterelement in Sekmente unterteilt ist, die ein Flügelsystem bilden.

20. Verfahren zur Bildung von Granalien aus geschmolzenem synthetischen Material, gekennzeichnet durch die Verfahrensschritte: Das Material wird einem hohlen, scheibenförmigen Rotor, enthaltend Seitenwände und einen Rand, durch eine Öffnung in einer Seitenwand zugeführt; das Material wird durch die Zentrifugalkräfte durch eine Reihe von am Umfang angeordneten Öffnungen im Rotorrand in einen peripheren Raum geleitet, der zwischen dem Rotorrand und der Umfangswand des umgebenden Gehäuses gebildet ist, wobei der Rotor Seitenwände aufweist, die mit der Umfangswand in Verbindung stehen; die aus den Öffnungen herausgepressten Stränge werden mit einem Trennband (66) geschnitten, das bei einem gegebenen Ort innerhalb des Gehäuses (10) angeordnet ist und das sich quer zu den Öffnungen (22) mit einem Abstand von diesen erstreckt, so daß die Materialstränge in Granalien (P) zerschnitten werden, wenn sich der Rotor dreht; die abgeschnittenen Granalien werden dadurch im wesentlichen tangential zu einem Kühl- und Sammelkanal (108) bewegt, der sich im wesentlichen tangential vom Gehäuse (10) und im wesentlichen in der Ebene des Messers (66) erstreckt, daß der Rotor (20) mit einer gegebenen Drehgeschwindigkeit gefahren wird, wodurch die Stränge mit genügender Geschwindigkeit gegen das Messer (66) bewegt werden, um das Moment zu gewährleisten, das die geschnittenen Granalien durch die Kammer in den Kanal bewegt.

21. Verfahren nach Anspruch 20, dadurch gekennzeichnet, daß die Granalien durch einen Kühlflüssigkeitsvorhang am Eingang des Kanals bewegt werden.

22. Verfahren nach Anspruch 20, bei dem die Größe der Granalien dadurch gesteuert wird, daß ein Trennelement für einen einzelnen Materialstrang quer zur allgemeinen Bewegungsebene der ausgepressten Materialstränge in einem solchen radialen Abstand vom Rand angeordnet wird, daß sich ein viscoelastisches Zusammenziehen des Materialstranges ergibt, wodurch der genannte Materialstrang durch das Trennelement nur abwechselnd bei aufeinanderfolgenden Umdrehungen des Rotors erfasst wird.

FIG.1

FIG.2

FIG.3

0 087 014

FIG.4

FIG.5

FIG.6a

FIG.6b

FIG.7